# EUROPÄISCHE PATENTANMELDUNG

(11) **EP 3 040 590 A1**
(43) Veröffentlichungstag der Anmeldung: **06.07.2016**
(21) Anmeldenummer: 15466021.1
(22) Anmeldetag: 21.12.2015
(51) Int. Cl.: F16K 31/08

(54) **REGELVENTIL**

(30) Priorität: 30.12.2014 CZ 20140967
(71) Anmelder: Skoda Auto a.s., 29301 Mladá Boleslav (CZ)
(72) Erfinder: Sikora, Michal, 66601 Tisnov (CZ)

(57) **Zusammenfassung**

Regelventil (1) bestehend aus einem Gehäuse (2), wo im Gehäuse (2) ein Schließelement (7) angeordnet ist und das Regelventil (1) einen Mitnehmer (8) umfasst. Dieser ist in Bezug zum Gehäuse (2) des Regelventils (1) mithilfe eines Stellglieds (9) verschiebbar, mit dem er verbunden ist. Der Mitnehmer (8) umfasst ein Betätigungselement (13), das aus einem Dauermagneten ausgebildet ist, während das Gehäuse (2) des Regelventils (1) aus einem diamagnetischen Material und das Schließelement (7) aus einer ferromagnetischen Kugel besteht. Durch die Verstellung des Stellglieds (9) in die geforderte Stellung wird auch das Betätigungselement (13) - Dauermagnet verschoben, durch dessen Wirkung das Schließelement (7) - die ferromagnetische Kugel in die geforderte Stellung eingezogen wird.

## Beschreibung

### Technisches Gebiet

Die Erfindung betrifft ein Regelventil, insbesondere ein Regelventil eines Kühl- und Heizsystems des Kraftfahrzeuges.

### Bisheriger Stand der Technik

Derzeit werden bei Kraftfahrzeugen Systeme verwendet, deren Zweck die Nutzung der Abwärme der Abgase ist. Diese Systeme werden zur schnelleren Erwärmung des Verbrennungsmotors genutzt, sodass er schneller seine optimale Betriebstemperatur erreicht, was den Kraftstoffverbrauch sowie Emissionen reduziert, aber auch den Wärmekomfort für die Insassen erhöht. Um die richtige Funktion der genannten Systeme zu gewährleisten, muss eine Regelung des übertragenen Wärmestromes sichergestellt werden, wozu die Regelventile genutzt werden.
Die üblich verwendeten Ventile sind konstruktiv kompliziert und deswegen auch aufwändig. Elektromagnetische Ventile ermöglichen keine stetige Regulierung und erfordern eine permanente Stromversorgung.

### Darstellung der Erfindung

Die Aufgabe wird durch ein erfindungsgemäßes Regelventil gelöst, das durch ein Gehäuse mit einem Eingangsteil und wenigstens einem Ausgangsteil gebildet wird, wo in dem Gehäuse ein Schließelement angeordnet ist, wobei das Regelventil ferner einen Mitnehmer aufweist. Die Darstellung der Erfindung liegt darin, dass der Mitnehmer, der verschiebbar gegenüber dem Ventilgehäuse angeordnet ist, ein Betätigungselement umfasst.
In einer erfindungsgemäßen vorteilhaften Ausführungsform sind das Betätigungselement aus einem Dauermagneten, das Ventilgehäuse aus einem diamagnetischen Material und das Schließelement aus einem ferromagnetischen Material ausgebildet.
Um die geforderte Einstellung des Regelventils zu gewährleisten, ist der Mitnehmer mit dem Betätigungselement verbunden.

Die erfindungsgemäße höhere Wirkung liegt darin, dass eine absolute Dichtheit des Innenraumes gesichert ist, da keine beweglichen Teile aus dem Ventilgehäuse herausragen. Weiterer Vorteil des erfindungsgemäßen Regelventils liegt darin, dass für die Erhaltung der jeweiligen Regelstellung des Ventils keine Energie verbraucht wird. Vorteilhaft ist auch der relativ geringere Druckverlust des strömenden Mediums bei der vollständig geöffneten Ventilstellung, wie auch die kleinen Abmessungen und das geringere Gewicht des Regelventils.

### Übersicht der Figuren der Zeichnungen

Die Erfindung wird anhand der Ausführungsbeispiele gemäß den beigefügten Zeichnungen näher erläutert, in denen zeigt die Fig. 1 eine perspektivische Ansicht des Regelventils, die Fig. 2 eine perspektivische Ansicht des Regelventils in geschlossener Stellung, die Fig. 3 eine perspektivische Ansicht des Regelventils in partiell geöffneter Stellung und die Fig. 4 eine perspektivische Ansicht des Regelventils in vollständig geöffneter Stellung.

### Ausführungsbeispiel der Erfindung

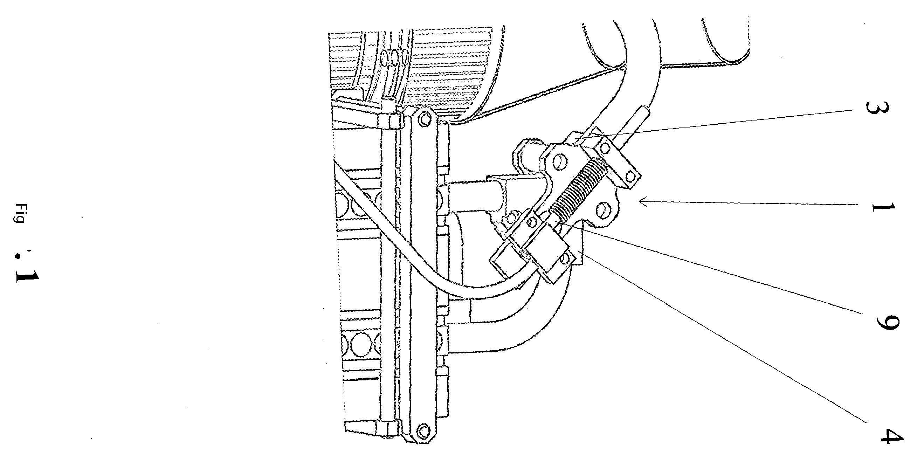

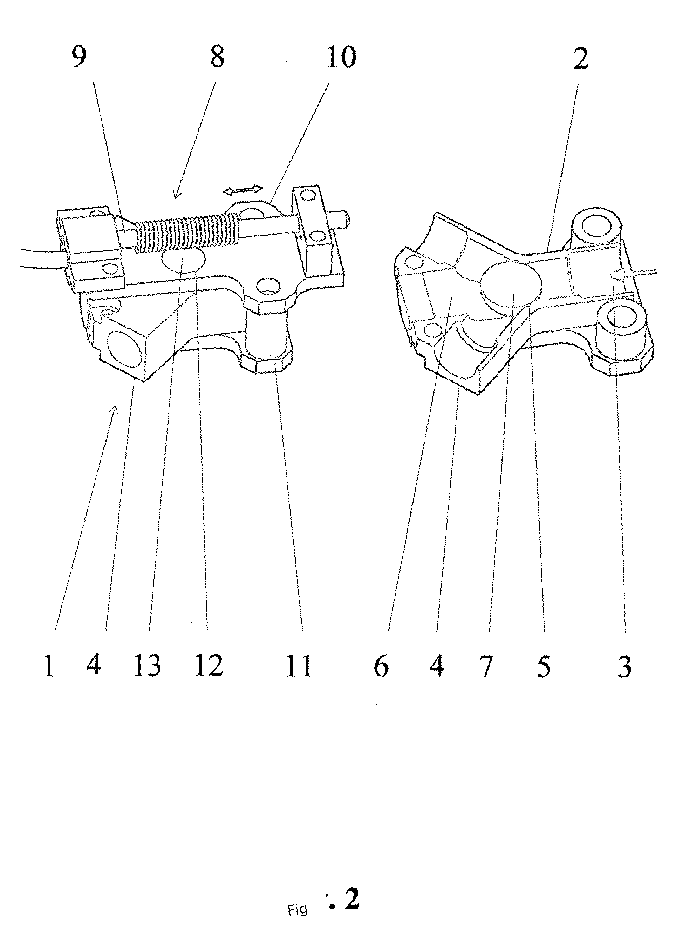

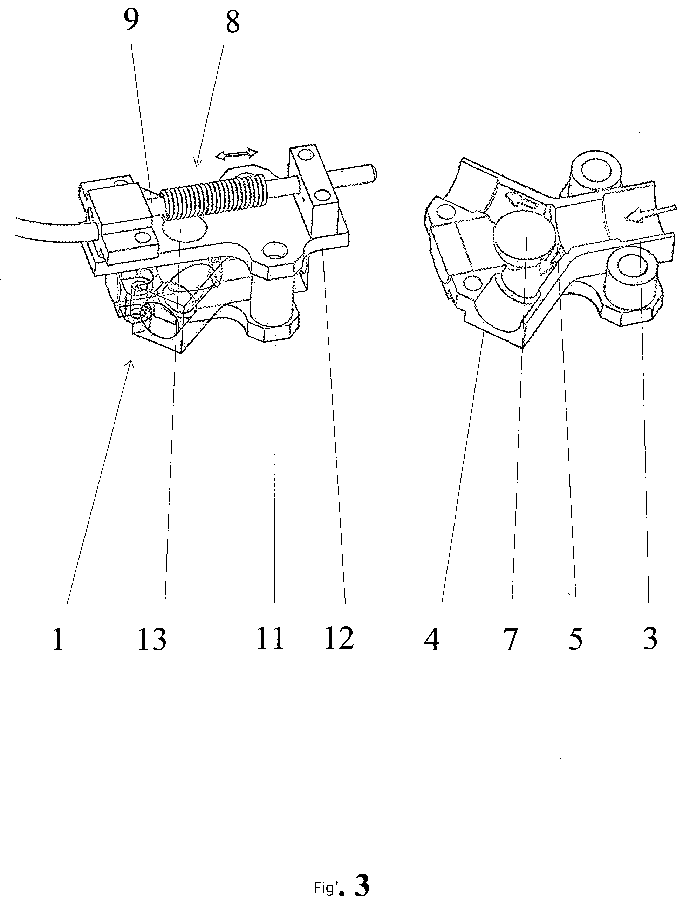

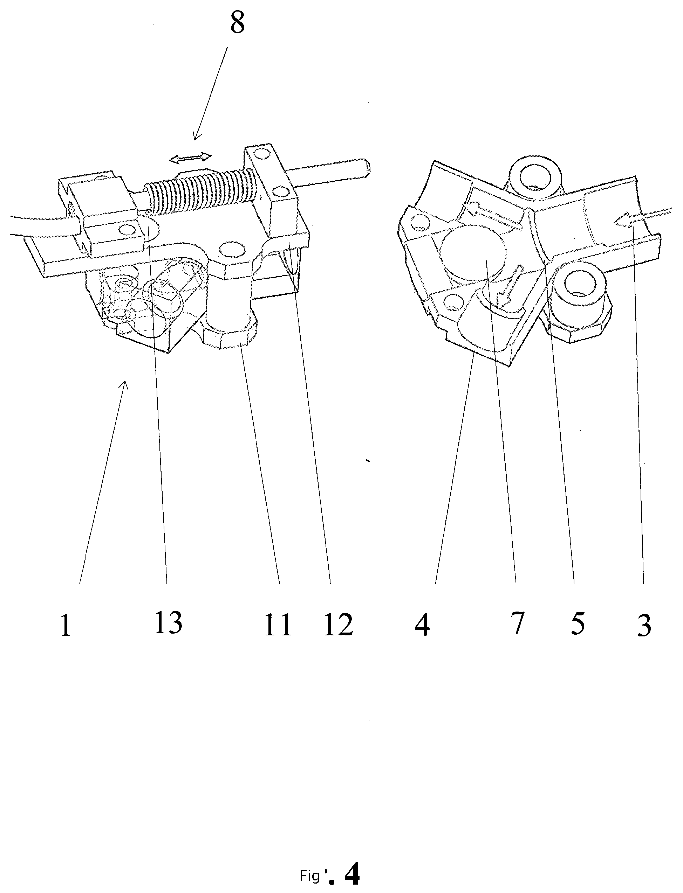

Die Fig. 1 zeigt ein erfindungsgemäßes Regelventil 1, das aus einem Gehäuse 2 in Form des Buchstabens Y (das Ventil dient zugleich als ein Verteiler) besteht. Das Gehäuse 2 weist einen Eingangsteil 3 und einen Ausgangsteil 4 auf. Zwischen dem Eingangsteil 3 und dem Ausgangsteil 4 ist ein Ventilsitz 5 ausgebildet. Gegenüber dem Ventilsitz 5 ist eine zylindrische Ausnehmung 6 ausgebildet. In dem Bereich zwischen dem Ventilsitz 5 und der zylindrischen Ausnehmung 6 ist ein Schließelement 7 angeordnet. Dies ist eine Kugel, die aus einem ferromagnetischen Material, z.B. Nickel, ausgebildet ist. Das Regelventil 1 weist weiter einen Mitnehmer 8 auf, der in Bezug zum Ventilgehäuse 2 verschiebbar angeordnet ist. Die Schubbewegung des Mitnehmers 8 wird über das Betätigungselement 9 realisiert. Dies kann z.B. ein Bowdenzug mit Rückfeder entsprechend der in vorliegenden Bildern dargestellten erfindungsgemäßen Ausführung, eventuell ein anderes Servomechanismus sein. Der Mitnehmer 8 besteht aus einem Oberteil 10 und Unterteil 11, die miteinander verbunden sind. Jeder Teil 10, 11 weist eine Öffnung 12 auf, in der das Betätigungselement 13 angeordnet ist, was ein Dauermagnet sein kann.
Das Funktionsprinzip des Regelventils 1 besteht darin, dass durch die Verschiebung des Mitnehmers 8 auch die Stellung des Betätigungselementes 13 und des Schließelementes 7 verändert wird - die ferromagnetische Kugel wird in die geforderte Stellung eingezogen, was den Fig. 2 bis 4 zu entnehmen ist. Die Fig. 2 zeigt das Regelventil 1 ii einer geschlossenen Stellung, wenn der Mitnehmer 8 nach rechts verschoben wird. In dieser Stellung wird das Schließelement 7 - die ferromagnetische Kugel in den Sitz 5 des Regelventils 1 eingezogen. Durch die Verschiebung des Mitnehmers 8 nach links wird infolge der Einwirkung der Betätigungselemente 13 das Schließelement 7 in die partiell geöffnete Stellung (s. Fig. 3) verstellt und so die Strömung des Mediums in der Leitung ermöglicht. Durch die Verschiebung des Mitnehmers 8 nach links wird das Schließelement 7 in die zylindrische Ausnehmung 6 verschoben und das Regelventil 1 befindet sich dann in vollständig geöffneter Stellung (s. Fig. 4).

### Bezugszeichenliste

- 1: Regelventil
- 2: Gehäuse
- 3: Eingangsteil
- 4: Ausgangsteil
- 5: Sitz
- 6: zylindrische Ausnehmung
- 7: Schließelement
- 8: Mitnehmer
- 9: Stellglied
- 10: Oberteil
- 11: Unterteil
- 12: Öffnung
- 13: Betätigungselement

## Patentansprüche

1. Regelventil (1) bestehend aus einem Gehäuse (2) mit einem Eingangsteil (3) und wenigstens einem Ausgangsteil (4), wo im Gehäuse (2) ein Schließelement (7) angeordnet ist und das Regelventil (1) ferner einen Mitnehmer (8) umfasst, **dadurch gekennzeichnet, dass** der Mitnehmer (8), der in Bezug zum Gehäuse (2) des Regelventils (1) verschiebbar angeordnet ist, ein Betätigungselement (13) umfasst.

2. Regelventil (1) nach Anspruch 1 **dadurch gekennzeichnet, dass** das Gehäuse (2) des Regelventils (1) aus diamagnetischem Material, das Schließelement (7) aus ferromagnetischem Material und das Betätigungselement (13) als Dauermagnet ausgebildet sind.

3. Regelventil (1) nach Anspruch 1 **dadurch gekennzeichnet, dass** der Mitnehmer (8) mit dem Stellglied (9) verbunden ist.
